# DEMANDE DE BREVET EUROPEEN

(11) **EP 3 306 428 A1**
(43) Date de publication de la demande: **11.04.2018**
(21) Numéro de dépôt: 17194487.9
(22) Date de dépôt: 03.10.2017
(51) Int. Cl.: G05D 1/00

(54) **SYSTEME AUTONOME DE PRISE DE VUES ANIMEES PAR UN DRONE AVEC POURSUITE DE CIBLE ET MAINTIEN DE L'ANGLE DE PRISE DE VUE DE LA CIBLE**

(30) Priorité: 05.10.2016 FR 1659605
(71) Demandeur: Parrot Drones, 75010 Paris (FR)
(72) Inventeur: LEURENT, Edouard, 75005 Paris (FR)
(74) Mandataire: Dupuis-Latour, Dominique

(57) **Abrégé**

Le système (1) comprend un drone (D) pourvu d'une caméra (C) et une station au sol, la caméra (C) étant orientée selon un axe de visée (3), le drone (D) étant apte à se déplacer de façon autonome pour réaliser une prise de vues animée d'une cible (T) se déplaçant avec la station au sol, l'orientation de l'axe de visée (3) étant telle que la cible (T) reste présente dans les images successives produites par ladite prise de vue. Le système comprend en outre des moyens de détermination (6) du vecteur-vitesse (VT1, VT2) de la cible (T) et de la position (TP1, TP2) de la cible (T) dans un repère donné, et des moyens de commande (2) configurés pour générer des instructions de vol à partir du vecteur-vitesse (VT1, VT2) déterminé, de la position déterminée (TP1, TP2) et d'un angle directionnel prédéterminé (αₚ), de sorte à maintenir l'angle entre l'axe de visée (3) de la caméra (C) et la direction du vecteur-vitesse (VT1, VT2) sensiblement à la valeur dudit angle directionnel prédéterminé (αₚ).

## Description

L'invention concerne les appareils motorisés volants pilotés à distance, ci-après désignés généralement sous la dénomination de "drones".

L'invention s'applique tout particulièrement aux drones à voilure tournante tels que les quadricoptères, dont un exemple typique est le *Bebop* 2 de Parrot SA, Paris, France, qui est un drone équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les drones à voilure tournante sont pourvus de rotors multiples entrainés par des moteurs respectifs commandables de manière différenciée afin de piloter le drone en attitude et en vitesse.

Les documents WO 2010/061099 A2 et EP 2 364 757 A1 (Parrot SA) décrivent un tel drone ainsi que son principe de pilotage par l'intermédiaire d'une station, en général au sol, tel qu'un téléphone ou baladeur multimédia à écran tactile et accéléromètre intégré, par exemple un téléphone cellulaire de type *iPhone* ou une tablette multimédia de type *iPad* (marques déposées). Ces stations incorporent les divers organes de contrôle nécessaires à la détection des commandes de pilotage et à l'échange bidirectionnel de données avec le drone via une liaison sans fil de type réseau local Wi-Fi (IEEE 802.11) ou Bluetooth. Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra vidéo frontale du drone peut être utilisée pour capter des séquences d'images d'une scène vers laquelle est tourné le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences vidéo, envoyées à d'autres internautes, partagées sur des réseaux sociaux, etc.

La caméra frontale peut être une caméra orientable, afin d'orienter de façon contrôlée dans une direction prédéterminée l'axe de visée, et donc le champ des images transmises avec le flux vidéo. Une technique mise en oeuvre notamment dans l'appareil *Bebop* 2 précité et décrite dans le EP 2 933 775 A1, consiste à utiliser une caméra grand-angle haute définition munie d'un objectif à champ hémisphérique de type *fish-eye* couvrant un champ d'environ 180° et à fenêtrer en temps courant l'image brute délivrée par ce capteur, par un traitement logiciel assurant la sélection des pixels utiles de l'image brute dans une zone de capture déterminée en fonction d'un certain nombre de paramètres, dont des commandes de pointage dans la direction d'une cible particulière choisie par l'utilisateur ou suivie automatiquement par le drone. En variante, ou même en complément, du contrôle de l'axe de visée de la caméra par un logiciel de fenêtrage, il est également possible de monter la caméra sur un support articulé trois-axes de type *gimbal* avec suspension à la Cardan, muni de servomoteurs pilotés en fonction des données gyrométriques et des commandes de pointage. L'invention s'applique bien évidemment à tout type de caméra, orientable ou non, et quel que soit son mode de pointage.

Dans un mode dit de poursuite (*tracking*), le drone peut être programmé pour suivre une cible mobile dont les coordonnées sont connues et pour que pendant son vol, l'axe de visée de la caméra soit dirigé vers ladite cible. Cette cible est typiquement la station elle-même, portée par un utilisateur qui peut être en mouvement (par exemple en train de pratiquer un sport où il se déplace - course, glisse, conduite, etc.). Dans ce mode, le drone est capable de filmer les évolutions de l'utilisateur sans que celui-ci n'ait à agir sur les déplacements du drone et sur l'axe de visée de la caméra.

Le drone suivant l'objet cible ajuste sa position et/ou la position du bloc caméra afin que l'objet cible soit toujours filmé par le drone. Le drone étant autonome, c'est-à-dire le déplacement est calculé par le drone et non piloté par un utilisateur, il détermine sa trajectoire en fonction des mouvements de l'objet cible et commande le bloc caméra afin que celui-ci soit toujours en direction de l'objet cible à filmer. Ainsi, lorsque la cible se déplace, le drone est non seulement capable de poursuivre la cible, mais encore il se positionne de manière à orienter la caméra pour que son axe de visée pointe en direction de la cible.

À cet effet, les coordonnées de la station au sol, obtenues par une centrale GPS équipant celui-ci de façon en soi connue, sont communiquées au drone par la liaison sans fil, et le drone peut donc ajuster ses déplacements de manière à suivre la cible et à ce que l'axe de visée de la caméra reste dirigé vers la cible, de sorte que l'image reste ainsi cadrée sur le sujet.

En mode de poursuite, il est connu que le drone suive le déplacement de la cible qui est dans le champ de vision de la caméra. Ainsi, lorsque la cible effectue une trajectoire qui s'éloigne du drone, ce dernier détecte le mouvement de la cible et se déplace à son tour en direction de la cible pour qu'elle reste dans le champ de vision de la caméra. Dans ce procédé le drone vient se positionner derrière la cible pour suivre son éloignement. On obtient de la sorte des images avec une prise de vue sur l'arrière de la cible. En outre, l'angle de prise de vue des images est modifié au cours du déplacement de la cible. En effet, lorsque la cible effectue un virage, alors que le drone la suit, le drone se trouve derrière ou devant la cible selon le sens du virage. Par conséquent, l'angle de prise de vue de la caméra par rapport au trajet de la cible est très différent par rapport à celui précédent le virage.

Un but de l'invention est de proposer un système permettant à un drone, en mode de prise de vues autonome d'une cible en déplacement, d'une part de conserver un même angle de prise de vue de la cible au cours de la poursuite, et d'autre part de maintenir le positionnement relatif du drone autour de la cible.

L'invention propose à cet effet un système de prise de vues animées, comprenant un drone pourvu d'une caméra et une station au sol communiquant par une liaison sans fil avec le drone, la caméra étant orientée selon un axe de visée, les déplacements du drone étant définis par des instructions de vol appliquées à un groupe propulseur ou un ensemble de groupes propulseurs du drone, le drone étant apte à se déplacer de façon autonome pour réaliser une prise de vues animée d'une cible se déplaçant avec la station au sol, l'orientation de l'axe de visée étant telle que la cible reste présente dans les images successives produites par ladite prise de vue.

De façon caractéristique de l'invention, le système comprend :
- des moyens de détermination du vecteur-vitesse de la cible et de la position de la cible dans un repère donné, et
- des moyens de commande configurés pour générer lesdites instructions de vol à partir :
   i. du vecteur-vitesse déterminé,
   ii. de la position déterminée, et
   iii. d'un angle directionnel prédéterminé,
   de sorte à maintenir l'angle entre l'axe de visée de la caméra et la direction du vecteur-vitesse sensiblement à la valeur dudit angle directionnel prédéterminé (αₚ).

Les caractéristiques suivantes peuvent être prises ensemble ou séparément.

De préférence, le système comprend des moyens d'activation du suivi de la cible par le drone aptes :
- à commander l'activation du suivi de la cible, et
- à calculer la valeur dudit angle directionnel prédéterminé au moment de ladite activation.

Lesdites instructions de vol générées par les moyens de commande peuvent être générées à partir d'une boucle d'asservissement sur une consigne de maintien dudit angle directionnel prédéterminé.

De préférence également, les moyens de commande sont configurés pour générer lesdites instructions de vol pour commander en outre le déplacement du drone à une distance prédéterminée entre le drone et la cible.

Dans une forme de mise en oeuvre préférentielle, les moyens d'activation du suivi de la cible par le drone sont en outre aptes à calculer la valeur de ladite distance prédéterminée au moment de ladite activation.

Lesdites instructions de vol générées par les moyens de commande peuvent être générées en outre à partir d'une boucle d'asservissement sur une consigne de maintien de ladite distance prédéterminée.

De préférence, les moyens de commande sont configurés pour générer lesdites instructions de vol pour commander en outre le déplacement du drone de sorte à maintenir un angle d'élévation prédéterminé, l'angle d'élévation prédéterminé étant un angle entre l'axe de visée de la caméra et un plan horizontal.

Dans un mode de réalisation préféré, les moyens d'activation du suivi de la cible par le drone sont en outre aptes à calculer la valeur dudit angle d'élévation prédéterminé au moment de ladite activation.

Lesdites instructions de vol générées par les moyens de commande peuvent être générées en outre à partir d'une boucle d'asservissement sur une consigne de maintien dudit angle d'élévation prédéterminé.

Dans un mode de réalisation particulier, la direction de l'axe de visée de la caméra est fixe par rapport à un axe principal du drone, les moyens de commande étant configurés pour générer des instructions de vol de manière à diriger l'axe de visée de la caméra vers la cible lors du suivi de la cible par le drone.

Dans un autre mode de réalisation particulier, la direction de l'axe de visée de la caméra est modifiable par rapport à un axe principal du drone grâce à des moyens de modification, les moyens de modification étant configurés pour diriger au moins en partie l'axe de visée de la caméra vers la cible lors du suivi de la cible par le drone.

Lesdits moyens de détermination du vecteur-vitesse et de la position de la cible peuvent opérer par observation des positions géographiques GPS successives de la cible, le repère donné étant un repère terrestre.

Lesdits moyens de détermination du vecteur-vitesse et de la position de la cible, peuvent opérer par analyse des images délivrées par la caméra du drone, le repère donné étant un repère lié au drone.

Dans ce cas, l'analyse des images délivrées par la caméra est de préférence une analyse de la position de la cible dans les images générées successivement par la caméra du drone, et le système comprend des moyens pour localiser et suivre ladite position dans les images successives.

On va maintenant décrire un exemple de mise en oeuvre de la présente invention, en référence aux dessins annexés où les mêmes références désignent d'une figure à l'autre des éléments identiques ou fonctionnellement semblables.
La figure 1 est une vue d'ensemble schématique d'un système de prise de vues comprenant un drone et une station au sol.
La figure 2 est une représentation schématique d'une vue de dessus du système de la figure 1 conformément à l'invention, la cible et le drone étant représentés chacun dans une position initiale et dans une position ultérieure.
La figure 3 est une représentation schématique des moyens mis en oeuvre dans le système de la figure 1.
La figure 4 est une représentation schématique d'une vue de côté du système de la figure 1 conformément à l'invention, la cible et le drone étant représentés chacun dans une position initiale et dans une position ultérieure.

L'invention s'applique à un drone D, par exemple un drone de type quadricoptère, tel que le Parrot *Bebop 2 Drone,* dont les divers aspects techniques sont décrits dans les EP 2 364 757A1, EP 2 613 213 A1, EP 2 450 862 A1 ou encore EP 2 613 214 A1 précités.

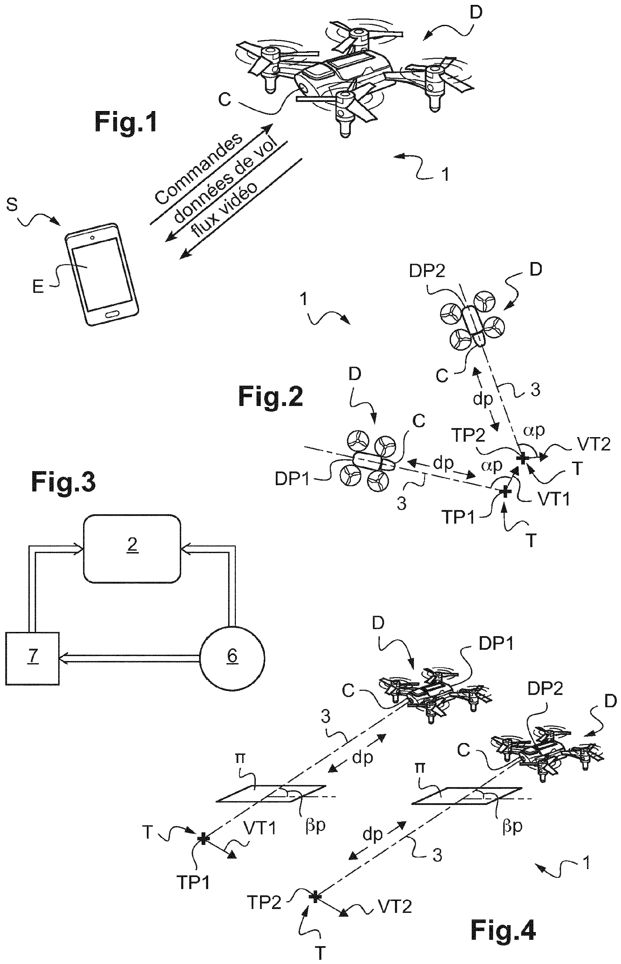

L'invention concerne un système 1 de prise de vues animées, comprenant un drone D muni d'une caméra C et une station au sol S communiquant par une liaison sans fil avec le drone D, représentés sur la figure 1.

Le drone D comporte un groupe propulseur ou un ensemble de groupes propulseurs comprenant des rotors coplanaires dont les moteurs sont pilotés indépendamment par un système intégré de navigation et de contrôle d'attitude. Il est pourvu d'une caméra C à visée frontale permettant d'obtenir une image de la scène vers laquelle est orienté le drone D. La caméra C est orientée selon un axe de visée 3, tel que montré en figure 2. Des capteurs inertiels (accéléromètres et gyromètres) permettent de mesurer avec une certaine précision les vitesses angulaires et les angles d'attitude du drone, c'est-à-dire les angles d'Euler (tangage, roulis et lacet) décrivant l'inclinaison du drone par rapport à un plan horizontal d'un repère terrestre fixe. Un télémètre à ultrasons disposé sous le drone D fournit par ailleurs une mesure de l'altitude par rapport au sol. Le drone D est également pourvu de moyens de localisation permettant de déterminer sa position DP1, DP2 absolue dans l'espace, notamment à partir de données issues d'un récepteur GPS.

Le drone D est piloté par la station au sol S, typiquement sous la forme d'une télécommande, par exemple de type télécommande d'aéromodélisme, d'un téléphone intelligent ou d'une tablette intelligente. Le téléphone intelligent ou la tablette intelligente sont pourvus d'un écran tactile E affichant l'image embarquée par la caméra frontale C, avec en superposition un certain nombre de symboles permettant l'activation de commandes de pilotage par simple contact du doigt d'un utilisateur sur l'écran tactile E. Lorsque le drone D est piloté par une station S de type télécommande, l'utilisateur peut être pourvu de lunettes de pilotage en immersion, souvent dénommées lunettes FPV (*First Person View*). La station S est également pourvue de moyens de liaison radio avec le drone D, par exemple de type réseau local Wi-Fi (IEEE 802.11), pour l'échange bidirectionnel de données du drone D vers la station S, notamment pour la transmission de l'image captée par la caméra C et de données de vol, et de la station S vers le drone D pour l'envoi de commandes de pilotage.

Le système constitué par le drone D et la station S, est configuré pour pouvoir donner au drone la faculté de suivre et de filmer de manière autonome une cible. Typiquement, la cible est constituée par la station S elle-même portée par l'utilisateur.

Conformément à l'invention, le suivi de la cible par le drone est réalisé en conservant le même angle de prise de vue de la cible par la caméra C du drone D. Les déplacements du drone D sont définis par des instructions de vol générées par des moyens de commande du système de navigation du drone D, et appliquées au groupe propulseur ou à l'ensemble de groupes propulseurs du drone D.

Selon l'invention illustrée en figures 2 et 3, pour conserver le même angle de prise de vue de la cible sur les images successives, les instructions des moyens de commande 2 sont générées de manière à maintenir un angle directionnel prédéterminé αₚ formé entre l'axe de visée 3 de la caméra C et la direction du vecteur-vitesse VT1, VT2 de la cible T. Cet angle correspond sensiblement à l'angle de prise de vue de la cible par la caméra C du drone D. On détermine à un instant donné une valeur, par exemple fixe, de l'angle directionnel prédéterminé αₚ, qui est sensiblement maintenu dans le mode de poursuite de la cible T par le drone D.

Autrement dit, le drone D suit un déplacement en fonction du déplacement de la cible T de sorte que l'angle directionnel courant α soit sensiblement égal à la valeur de l'angle directionnel prédéterminé αₚ au cours des déplacements respectifs de la cible T et du drone D. Ainsi, l'angle directionnel prédéterminé αₚ est l'angle selon lequel on souhaite effectuer la prise de vue en continu de la cible T. La valeur de l'angle directionnel prédéterminé αₚ peut selon un autre mode de réalisation être choisie parmi un ensemble de valeurs préenregistrées dans le système 1.

A cette fin, les moyens de commande 2 du système sont configurés pour générer lesdites instructions de vol à partir :
i. du vecteur-vitesse VT1, VT2 de la cible T,
ii. de la position de la cible TP1, TP2, et
iii. d'un angle directionnel prédéterminé αₚ.

L'orientation de l'axe de visée 3 de la caméra du drone est telle que la cible T reste présente sur les images successives produites par ladite prise de vue.

Dans un premier mode de réalisation, la direction de l'axe de visée 3 de la caméra C est fixe par rapport à un axe principal du drone. Les moyens de commande 2 sont par conséquent configurés pour générer des instructions de vol de manière à positionner l'axe principal du drone de sorte que l'axe de visée 3 de la caméra C soit dirigé vers la cible T pendant le suivi de la cible T par le drone D.

Dans un deuxième mode de réalisation, la direction de l'axe de visée 3 de la caméra C est modifiable par rapport à un axe principal du drone grâce à des moyens de modification. Les moyens de modification sont configurés pour diriger au moins en partie l'axe de visée 3 de la caméra vers la cible T lors du suivi de la cible par le drone D. La caméra C est par exemple une caméra fixe de type *fish-eye* à champ hémisphérique, comme décrit par exemple dans le EP 2 933 775 A1 (Parrot). Avec une telle caméra, les changements de l'axe de visée 3 de la caméra C sont réalisés non pas par déplacement physique de la caméra, mais par recadrage et retraitement des images prises par la caméra en fonction d'un angle de visée virtuel, déterminé par rapport à l'axe principal du drone, donné en consigne. La caméra C peut aussi être une caméra mobile assemblée au drone, par exemple sous le corps du drone, dans ce cas, les moyens de modification comprennent des moteurs pour faire pivoter la caméra selon au moins l'un des trois axes, voire les trois axes afin d'orienter l'axe de visée de la caméra de telle sorte que la cible reste présente dans les images successives produites par ladite prise de vue.

Les coordonnées de la position TP1, TP2 de la cible T permettent de déterminer l'orientation de l'axe de visée 3 de la caméra C pour que la cible T reste présente sur les images successives produites lors de la prise de vue. Les coordonnées de l'axe de visée 3 de la caméra C sont déterminées grâce aux capteurs du drone, qui déterminent la position du drone D.

Les coordonnées du vecteur-vitesse VT1, VT2 et la position TP1, TP2 de la cible T par rapport au drone D permettent de déterminer l'angle directionnel courant α entre l'axe de visée 3 de la caméra C et la direction du vecteur-vitesse VT1, VT2.

Les moyens de commande 2 sont par exemple configurés pour générer lesdites instructions de vol à partir d'une boucle d'asservissement sur une consigne de maintien dudit angle directionnel prédéterminé αₚ, par exemple à l'aide d'une unité de calcul munie d'un programme d'exécution prévu à cet effet. Le principe de l'asservissement est de mesurer en permanence l'écart entre la valeur courante de la grandeur à asservir et la valeur prédéterminée que l'on désire atteindre, pour déterminer les instructions de commande appropriées pour atteindre la valeur prédéterminée. Ainsi, les moyens de commande 2 déterminent d'abord l'angle directionnel courant α, puis donnent des instructions de vol pour que le drone D se déplace dans une position DP2 dans laquelle l'angle directionnel courant α correspond à l'angle directionnel prédéterminé αₚ. La boucle d'asservissement est répétée continuellement par les moyens de commande 2 pour maintenir la valeur de l'angle directionnel prédéterminé αₚ.

En référence à la Figure 2, on a représenté schématiquement le drone D en mouvement autonome, équipé de la caméra C qui réalise une séquence d'images animées de la cible T. La cible T a une position initiale TP1 et le drone D a une position initiale DP1, définies dans le repère terrestre. La cible D se déplace avec un vecteur-vitesse VT1 à la position DP1, et VT2 à la position DP2, la direction et la valeur changeant au cours du temps. Dans la position initiale DP1, l'axe de la caméra C est dirigé vers la cible T et forme un angle directionnel avec la direction du vecteur-vitesse VT1, qui correspond à l'angle directionnel prédéterminé αₚ. Sur la même figure 2, la cible est représentée dans une position ultérieure TP2 et le drone dans une position ultérieure DP2. La cible T passe de la position initiale TP1 à la position ultérieure TP2. Dans le mode de suivi, le drone D se déplace de la position initiale DP1 à la position ultérieure DP2, grâce à des instructions de vol générées par les moyens de commande. Les instructions de vol sont définies de manière à garder le même angle directionnel prédéterminé αₚ que celui des positions initiales. Ainsi, dans leurs positions ultérieures respectives TP2, DP2, on observe que l'angle directionnel formé entre l'axe de visée 3 de la caméra C et la direction du vecteur-vitesse VT2 est sensiblement identique à celui qui était défini dans les positions initiales TP1, DP1 de la cible T et le drone D.

Ainsi, grâce au système 1 de l'invention, l'angle de prise de vue de la cible T par la caméra C reste le même malgré les déplacements de la cible T et du drone D.

Tel que représenté sur les figures 2 et 3, et afin de permettre aux moyens de commande 2 de calculer l'angle directionnel courant α, le système 1 comprend en outre des moyens de détermination 6 de la position TP1, TP2 et du vecteur-vitesse VT1, VT2 de la cible T dans un repère donné.

Les moyens de détermination 6 transmettent les coordonnées du vecteur-vitesse VT1, VT2 et de la position TP1, TP2 de la cible T aux moyens de commande 2. Les moyens de détermination 6 déterminent ces coordonnées de manière répétitives pour transmettre aux moyens de commande 2 des valeurs actualisées.

Dans un premier mode de réalisation, lesdits moyens de détermination 6 du vecteur-vitesse VT1, VT2 et de la position de la cible T opèrent par observation des positions géographiques GPS successives de la cible T.

Le repère donné permettant la détermination du vecteur-vitesse VT1, VT2 et de la position TP1, TP2 de la cible T est par conséquent un repère terrestre. Les moyens de détermination 6 reçoivent les positions successives GPS de la cible T au cours du temps. Les moyens de détermination 6 peuvent ainsi en déduire les coordonnées du vecteur-vitesse VT1, VT2 de la cible T. La position de la cible T est donnée par les coordonnées GPS de la station au sol.

Selon une première variante de ce premier mode de réalisation, les moyens de détermination 6 sont agencés dans le drone D. Les positions GPS de la cible T sont transmises par la cible T aux moyens de détermination 6 du drone D.

Selon une deuxième variante de ce premier mode de réalisation, les moyens de détermination 6 sont agencés dans la station au sol de la cible T. Ici, les coordonnées du vecteur-vitesse VT1, VT2 et de la position TP1, TP2 de la cible T sont déterminés dans la station au sol, puis transmises au drone D.

Dans un second mode de réalisation, lesdits moyens de détermination 6 du vecteur-vitesse VT1, VT2 et de la position de la cible T, opèrent par analyse des images délivrées par la caméra C du drone T. Le repère donné est ici un repère lié au drone D. Dans ce cas, l'analyse des images délivrées par la caméra C est une analyse de la position TP1, TP2 de la cible T dans les images générées successivement par la caméra C du drone D. Les moyens de détermination 6 comprennent des moyens pour localiser et suivre la position TP1, TP2 de la cible T dans les images successives. Dans ce mode de réalisation particulier, les moyens de détermination 6 sont localisés dans le drone D. À cet effet, un programme d'analyse d'images prévu dans les moyens de détermination 6 embarqués du drone D, ou dans un circuit dédié, est configuré pour suivre le déplacement de la cible T dans la séquence d'images générée par la caméra C, et pour en déduire dans quelle direction angulaire se trouve la cible T par rapport à l'axe de visée 3 de la caméra C. Plus précisément, ce programme est configuré pour localiser et suivre dans les images successives un motif visuel ou une tache de couleur représentative de l'aspect visuel de la cible par rapport à un fond (par exemple un motif élaboré par analyse des niveaux de gris de l'image). Par exemple, pour la prise de vues d'un utilisateur-cible pratiquant un sport de neige, le fond sera en général blanc et la couleur de la tache dans les images sera celle des vêtements de l'utilisateur. Cette approche permet par ailleurs de disposer de données angulaires de position de l'utilisateur à suivre à une cadence sensiblement plus rapide que celle avec laquelle les coordonnées GPS sont délivrées (en général 1 fois par seconde), à savoir la cadence des images qui est typiquement de 30 images par seconde pour ce type d'application.

Dans ce second mode de réalisation, l'analyse d'image est associée à un autre moyen de mesure qui fournit au moins en partie une position géographique TP1, TP2 de la cible T. Ces moyens peuvent notamment provenir de l'unité GPS de la station au sol, ou d'un capteur de pression de type barométrique, agencé dans la station au sol de la cible T. Les moyens pour déterminer l'axe de visée 3 de la caméra C étant capables d'indiquer une position angulaire de la cible T par rapport à l'axe principal du drone, sont ainsi complétés par la prise en compte d'un signal géographique. L'électronique embarquée du drone est capable de savoir par recoupement entre les données géographiques et les données de détection angulaire, la position de la cible T. On obtient de la sorte des coordonnées très précises de la position TP1, TP2 et du vecteur-vitesse VT1, VT2 de la cible T.

Selon un mode de réalisation particulier, les moyens de commande 2 sont en outre configurés pour générer lesdites instructions de vol pour commander le déplacement du drone D à une distance prédéterminée dₚ entre le drone D et la cible T. Autrement dit, dans le mode de suivi, on maintient également la distance d entre la cible T et la caméra C, en plus du maintien de l'angle de prise de vue de la caméra C. La distance prédéterminée dₚ a une valeur fixe au cours du suivi. Ainsi, la perception des dimensions de la cible T reste sensiblement la même au cours de la prise de vue, avec une focale de caméra C constante. La distance courante d entre la cible T et la caméra C est calculée par les moyens de commande 2, à partir de la position de la cible TP1, TP2 déterminée par les moyens de détermination 6 et par la position du drone DP1, DP2 déterminée par ses capteurs inertiels.

Les moyens de commande 2 sont par exemple configurés pour générer les instructions de vol à partir d'une boucle d'asservissement sur une consigne de maintien de ladite distance prédéterminée dₚ. Le procédé est similaire à celui concernant la boucle d'asservissement sur la consigne de maintien de l'angle directionnel prédéterminé αₚ. Les moyens de commande 2 calculent la distance courante d et génèrent des instructions pour déplacer le drone dans une position DP2 dont la distance avec la cible T correspond à la distance prédéterminée dₚ. Ainsi, la distance entre les positions ultérieures TP2, DP2 du drone D et de la cible T de la figure 3 est sensiblement identique à la distance entre les positions initiales TP1, DP1 du drone D et de la cible T.

Selon un mode de réalisation particulier, représenté sur les figures 2 et 4, les moyens de commande 2 sont en outre configurés pour générer des instructions de vol pour commander le déplacement du drone D de sorte à maintenir un angle d'élévation prédéterminé βₚ défini entre l'axe de visée 3 de la caméra C et le plan horizontal π. Cet angle d'élévation prédéterminé βₚ permet de déterminer l'altitude relative du drone par rapport à la cible. En maintenant un angle d'élévation prédéterminé βₚ constant, le drone D maintient son altitude relative à la cible T. Le plan horizontal π est défini par rapport au repère terrestre, et peut être défini à une altitude quelconque. La valeur de l'angle d'élévation courant β est déterminée par les moyens de commande 2 en fonction de l'axe de visée 3 de la caméra C et du plan horizontal π.

Les moyens de commande 2 sont par exemple configurés pour générer les instructions de vol à partir d'une boucle d'asservissement sur une consigne de maintien dudit angle d'élévation prédéterminé βₚ. Le procédé est similaire à celui concernant la boucle d'asservissement sur la consigne de maintien de l'angle directionnel prédéterminé αₚ et celui de la distance prédéterminée dₚ entre la caméra C et la cible T. Ainsi, comme le montre la figure 4, l'angle d'élévation courant β par rapport au plan horizontal π a la même valeur entre les positions initiales TP1, DP1 de la cible T et du drone D, et les positions ultérieures TP2, DP2.

Dans un mode de réalisation particulier, les moyens de commande sont configurés pour générer des instructions de vol permettant de modifier la position du drone pour modifier simultanément l'angle directionnel courant α, la distance courante d entre la caméra C et la cible T et l'angle d'élévation courant β pour atteindre les trois valeurs prédéterminées correspondantes.

Dans le mode de réalisation représenté sur la figure 2, le système 1 comprend des moyens d'activation 7 du suivi de la cible par le drone. Les moyens d'activation 7 du suivi sont aptes à commander l'activation et la désactivation du suivi de la cible T. Les moyens d'activation sont par exemple agencés dans la station au sol pour pouvoir être activés facilement par l'utilisateur, et comportent par exemple un bouton d'activation. Ainsi, lorsque l'utilisateur actionne le bouton, le drone passe dans le mode de suivi de la cible.

Selon un mode particulier de l'invention, les moyens d'activation 7 du suivi de la cible par le drone sont aptes à calculer au moins la valeur dudit angle directionnel prédéterminé au moment de ladite activation. Autrement dit, les moyens d'activation 7 définissent la valeur de l'angle directionnel prédéterminé αₚ qui sera maintenu lors du suivi de la cible par le drone. Les moyens d'activation 7 sont par exemple configurés pour que la valeur de l'angle directionnel prédéterminé soit l'angle directionnel courant au moment de l'activation, notamment au moment où le bouton est actionné.

Les moyens d'activation 7 calculent l'angle directionnel courant en fonction des coordonnées du vecteur-vitesse et de la position de la cible, qui lui sont transmises par les moyens de détermination 6. Ainsi, l'utilisateur positionne le drone et la caméra selon un angle de vue qu'il souhaite maintenir, et active le mode de suivi grâce aux moyens d'activation 7 pour que le drone suive la cible en conservant l'angle de vue choisi.

Selon un mode de réalisation particulier, les moyens d'activation 7 du suivi de la cible par le drone sont aptes à calculer également la valeur de la distance prédéterminée dₚ entre la cible et le drone au moment de ladite activation. De manière semblable, les moyens d'activation 7 sont par exemple aptes à calculer la valeur dudit angle d'élévation prédéterminé βₚ au moment de ladite activation. Les valeurs prédéterminées sont transmises aux moyens de commande 2 qui les enregistrent dans une mémoire. Ainsi, lorsque les moyens d'activation 7 sont actionnés, les valeurs des trois paramètres prédéterminés sont calculées par les moyens d'activation 7, puis sont maintenus au cours du suivi de la cible par les moyens de commande 2 tant que l'utilisateur n'a pas désactivé le suivi de la cible T.

## Revendications

1. Système de prise de vues animées, comprenant un drone (D) pourvu d'une caméra (C) et une station au sol (S) communiquant par une liaison sans fil avec le drone, la caméra (C) étant orientée selon un axe de visée (3), les déplacements du drone (D) étant définis par des instructions de vol appliquées à un groupe propulseur ou un ensemble de groupes propulseurs du drone (D), le drone (D) étant apte à se déplacer de façon autonome pour réaliser une prise de vues animée d'une cible (T) se déplaçant avec la station au sol (S), l'orientation de l'axe de visée (3) étant telle que la cible (T) reste présente dans les images successives produites par ladite prise de vue,
le système étant **caractérisé en ce qu'**il comprend
- des moyens de détermination (6) du vecteur-vitesse (VT1, VT2) de la cible (T) et de la position (TP1, TP2) de la cible (T) dans un repère donné, et
- des moyens de commande (2) configurés pour générer lesdites instructions de vol à partir :
i. du vecteur-vitesse (VT1, VT2) déterminé,
ii. de la position déterminée (TP1, TP2) et
iii. d'un angle directionnel prédéterminé (αₚ) de sorte à maintenir l'angle entre l'axe de visée (3) de la caméra (C) et la direction du vecteur-vitesse (VT1, VT2) sensiblement à la valeur dudit angle directionnel prédéterminé (αₚ).

2. Système selon la revendication 1, **caractérisé en ce que** le système comprend des moyens d'activation (7) du suivi de la cible (T) par le drone (D) aptes
- à commander l'activation du suivi de la cible (T) et
- à calculer la valeur dudit angle directionnel prédéterminé (αₚ) au moment de ladite activation.

3. Système selon la revendication 1 ou 2, **caractérisé en ce que** lesdites instructions de vol générées par les moyens de commande (2) sont générées à partir d'une boucle d'asservissement sur une consigne de maintien dudit angle directionnel prédéterminé (αₚ).

4. Système selon l'une quelconque des revendications précédentes, **caractérisé en ce que** les moyens de commande (2) sont configurés pour générer lesdites instructions de vol pour commander en outre le déplacement du drone (D) à une distance prédéterminée (dₚ) entre le drone (D) et la cible (T).

5. Système selon la revendication 4 en dépendance de la revendication 2, **caractérisé en ce que** les moyens d'activation (7) du suivi de la cible (T) par le drone (D) sont en outre aptes à calculer la valeur de ladite distance prédéterminée (dₚ) au moment de ladite activation.

6. Système selon la revendication 4 ou 5, **caractérisé en ce que** lesdites instructions de vol générées par les moyens de commande (2) sont générées en outre à partir d'une boucle d'asservissement sur une consigne de maintien de ladite distance prédéterminée (dₚ).

7. Système selon l'une quelconque des revendications précédentes, **caractérisé en ce que** les moyens de commande (2) sont configurés pour générer lesdites instructions de vol pour commander en outre le déplacement du drone (D) de sorte à maintenir un angle d'élévation prédéterminé (βₚ), l'angle d'élévation prédéterminé (βₚ) étant un angle entre l'axe de visée (3) de la caméra (C) et un plan horizontal (π).

8. Système selon la revendication 7 en dépendance de la revendication 2, **caractérisé en ce que** les moyens d'activation (7) du suivi de la cible (T) par le drone (D) sont en outre aptes à calculer la valeur dudit angle d'élévation prédéterminé (βₚ) au moment de ladite activation.

9. Système selon la revendication 7 ou 8, **caractérisé en ce que** lesdites instructions de vol générées par les moyens de commande (2) sont générées en outre à partir d'une boucle d'asservissement sur une consigne de maintien dudit angle d'élévation prédéterminé (βₚ).

10. Système selon l'une quelconque des revendications précédentes, **caractérisé en ce que** la direction de l'axe de visée (3) de la caméra (C) est fixe par rapport à un axe principal du drone, les moyens de commande étant configurés pour générer des instructions de vol de manière à diriger l'axe de visée (3) de la caméra (C) vers la cible (T) lors du suivi de la cible (T) par le drone.

11. Système selon l'une quelconque des revendications 1 à 9, **caractérisé en ce que** la direction de l'axe de visée (3) de la caméra (C) est modifiable par rapport à un axe principal du drone grâce à des moyens de modification, les moyens de modification étant configurés pour diriger au moins en partie l'axe de visée (3) de la caméra (C) vers la cible (T) lors du suivi de la cible (T) par le drone (D).

12. Système selon l'une quelconque des revendications précédentes, **caractérisé en ce que** lesdits moyens de détermination (6) du vecteur-vitesse (VT1, VT2) et de la position (TP1, TP2) de la cible (T) opèrent par observation des positions géographiques GPS successives de la cible (T), le repère donné étant un repère terrestre.

13. Système selon l'une quelconque des revendications précédentes, **caractérisé en ce que** lesdits moyens de détermination (6) du vecteur-vitesse (VT1, VT2) et de la position (TP1, TP2) de la cible (T), opèrent par analyse des images délivrées par la caméra (C) du drone (D), le repère donné étant un repère lié au drone.

14. Système selon la revendication 13, **caractérisé en ce que** l'analyse des images délivrées par la caméra (C) est une analyse de la position (TP1, TP2) de la cible (T) dans les images générées successivement par la caméra (C) du drone (D), et **en ce qu'**il comprend des moyens pour localiser et suivre ladite position (TP1, TP2) dans les images successives.
